# EUROPEAN PATENT SPECIFICATION

(11) **EP 3 000 588 B1**
(45) Date of publication and mention of the grant of the patent: **02.08.2017**
(21) Application number: 15002599.7
(22) Date of filing: 03.09.2015
(51) Int. Cl.: B29D 11/00, G02B 1/04

(54) **PLASTIC OPTICAL COMPONENT AND METHOD FOR PRODUCING THE SAME**
OPTISCHE KOMPONENTE AUS PLASTIK UND VERFAHREN ZUR HERSTELLUNG DAVON
COMPOSANT OPTIQUE EN PLASTIQUE ET SON PROCÉDÉ DE PRODUCTION

(30) Priority: 24.09.2014 JP 2014194016
(43) Date of publication of application: 30.03.2016
(73) Proprietor: CANON KABUSHIKI KAISHA, Tokyo (JP)
(72) Inventor: Kikuchi, Wataru, Tokyo (JP)
(74) Representative: WESER & Kollegen

(56) References cited:
- EP-A1- 1 560 060
- EP-A1- 1 591 803
- EP-A1- 2 436 731

## Description

### BACKGROUND OF THE INVENTION

### Field of the Invention

The present invention relates to a plastic optical component, in particular, a viewfinder lens used for optical instruments such as digital cameras.

### Description of the Related Art

In recent years, there has been an increasing demand for producing thick optical components by an injection molding method. However, an increase in the thickness of optical components increases the stress caused by the difference in curing shrinkage between a surface plastic layer cured early during the molding and an internal plastic portion cured later. This poses problems such as generation of vacuum bubbles (voids) in such an optical component and generation of residual internal stress. Such a thick optical component also poses a problem such as a considerable increase in the molding cycle because the cooling time in a die is sharply increased as the thickness is increased.

To address the above problems, Japanese Patent Laid-Open No. 8-187793 proposes an invention in which a plastic core lens is accommodated in an interior and plastic coatings are integrally formed on front and back optical surfaces of the core lens at the same time.

Thick plastic optical components need to be used in consideration of deformation of the plastic optical components due to moisture absorption. Thus, such a thick plastic optical component needs to be made of a plastic with low water absorption. However, there is currently no plastics having high surface hardness among plastics with low water absorption used in injection molding. Therefore, in digital cameras, rubfastness required when a thick plastic optical component is used for a portion exposed to the outside cannot be satisfied. In copiers or the like, there is also a concern that a thick plastic optical component is scratched during production and maintenance. In the related art described in Japanese Patent Laid-Open No. 8-187793, this problem is also unavoidable because the core lens and the plastic coatings are made of the same material. This problem is expected to be addressed by coating the core lens with a material having high water absorption but high surface hardness at a thickness that causes little deformation due to moisture absorption.

In an optical component used for a portion exposed to the outside, however, it is assumed that a user wipes off dirt attached to the optical component with an organic solvent. Therefore, not only a plastic material exposed to the outside, but also a material for the core lens need to have excellent organic solvent resistance. However, an optical component simply made of a material having excellent organic solvent resistance is not satisfactory. When an organic solvent is applied to the optical component and the optical component is exposed to a constant-temperature-and-humidity test environment that assumes long-term deterioration, cracks are sometimes formed in the core lens. Additionally, EP 2 436 731 A1 and EP 1 591 803 A1 disclose plastic optical parts comprising high molecular weight polycarbonate resins and may be coated by protective layers, such as a hard coat layer. EP 1 560 060 A1 is related to sheet like light control element comprising a high molecular weight polycarbonate and having a polarizing and/or photochromic function, wherein the light control element may be integrated into a plastic lens.

### SUMMARY OF THE INVENTION

The present invention in its first aspect provides a plastic optical component as specified in claims 1 to 12.

The present invention in its second aspect provides a method for producing a plastic optical component as specified in claims 13 and 14.

In the plastic optical component according to an embodiment of the present invention, even if a plastic optical component to which an organic solvent is applied is exposed to a constant-temperature-and-humidity test environment that assumes long-term deterioration, formation of cracks in the core lens (core member) can be suppressed.

Further features of the present invention will become apparent from the following description of exemplary embodiments with reference to the attached drawings.

### BRIEF DESCRIPTION OF THE DRAWINGS

Fig. 1A is a plan view illustrating a plastic component according to an embodiment of the present invention, Fig. 1B is a sectional view illustrating the plastic component, and Fig. 1C is a sectional view illustrating a plastic component according to another embodiment of the present invention.
Figs. 2A to 2D are sectional views illustrating a die according to an embodiment of the present invention.
Figs. 3A and 3B are a plan view and a sectional view illustrating a plastic component in Example 1 according to the present invention, respectively.
Figs. 4A and 4B are a plan view and a sectional view illustrating a plastic component in Example 2 according to the present invention, respectively.
Figs. 5A to 5F are sectional views illustrating a die in Example 2 according to the present invention.

### DESCRIPTION OF THE EMBODIMENTS

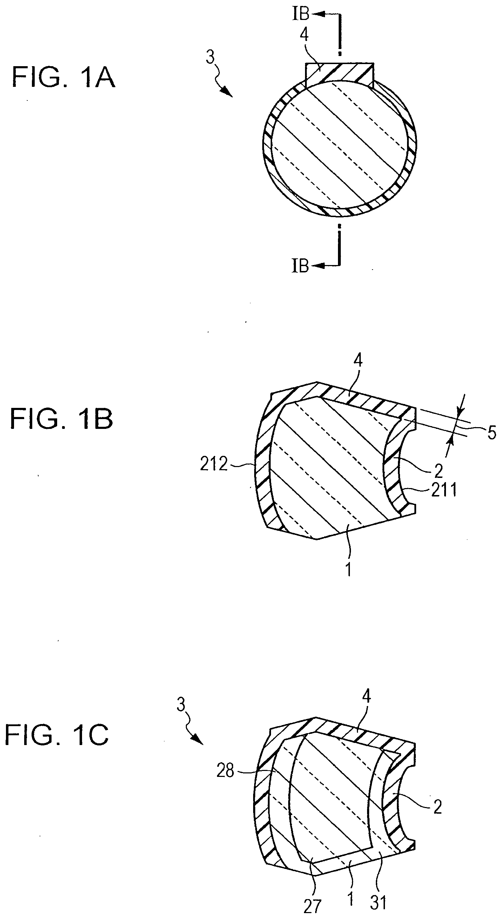

[.0015] Fig. 1A is a plan view illustrating an example of a plastic optical component according to an embodiment of the present invention and Fig. 1B is a sectional view illustrating an example of the plastic optical component. Fig. 1C is a sectional view illustrating an example of an plastic optical component according to another embodiment different from the embodiment in Fig. 1B. In the drawings, a plastic optical component 3 includes a core lens 1 (hereafter referred to as a "core member"), plastic coatings 2, and a rib 4, and the reference numeral 5 represents a thickness of the rib 4. The rib 4 is formed on a part of the side surface of the core member 1. As a result of the formation of the rib 4 on only a part of the side surface, when the plastic coatings are molded in a die, a side surface on which the rib is not formed can be brought into contact with the die and can be firmly fixed. The reference numerals 211 and 212 each represent an optical surface of the plastic optical component. In an embodiment of the present invention, the core member 1 illustrated in Fig. 1 contains a polycarbonate having a viscosity-average molecular weight of 23000 or more and 31000 or less. Thus, even if an organic solvent is applied to the plastic optical component 3, the formation of cracks in the core member 1 caused by exposing the plastic optical component 3 to a constant-temperature-and-humidity test environment that assumes long-term deterioration can be suppressed. The viscosity-average molecular weight of a polycarbonate that has been used for optical components is about 15000 to 21000. This is because a polycarbonate with a low molecular weight exhibits good flowability during molding and can be molded at a low pressure, and therefore high optical surface precision can be achieved. In the plastic optical component according to this embodiment, however, stress is easily generated due to the difference in shrinkage and moisture absorption between the core member and the plastic coatings. In particular, when a plastic optical component to which an organic solvent is applied is exposed to a constant-temperature-and-humidity test environment that assumes long-term deterioration, cracks are sometimes formed in the core member. It has been determined that the formation of cracks is caused by the fact that, in a state in which stress is generated, a force of releasing stress exerted due to the stimulus of organic solvent application and the stimulus of constant temperature and humidity exceeds the intermolecular force and by the fact that the polycarbonate contained in the core member is hydrolyzed. The solution has been found by increasing the molecular weight of the core member. Such an increase in the molecular weight of the core member is believed to make it difficult to achieve high optical surface precision. However, since the surface of the core member is coated with the plastic coatings, a material having a high molecular weight can be used. The molecular weight is, for example, 23000 or more and 31000 or less. If the molecular weight is less than 23000, it is difficult to suppress the formation of cracks in the core member caused by exposing a plastic optical component, to which an organic solvent is applied, to a constant-temperature-and-humidity test environment that assumes long-term deterioration. If the molecular weight is more than 31000, it is difficult to perform molding. The viscosity-average molecular weight is a value determined by the measurement method described in JIS K 7252-4 "Plastics - Determination of average molecular mass and molecular mass distribution of polymers using size-exclusion chromatography".

As illustrated in Fig. 1C, a core member 1 may have a three-layer structure including a core portion 27 and coating portions 28 formed on the front and back surfaces of the core portion 27. A rib 31 of the core member 1 is formed on a part of the side surface of the core portion 27. As a result of the formation of the rib 31 on only a part of the side surface of the core portion 27, when the coating portions 28 are molded in a die, a side surface on which the rib 31 is not formed can be brought into contact with the die and can be firmly fixed.

Such a three-layer structure can provide a thicker plastic optical component while maintaining good optical properties. Molding of a thicker plastic optical component at a time sometimes increases the stress caused by difference in curing shrinkage between a surface plastic layer cured early during the molding and an internal plastic portion cured later. As a result, residual stress and vacuum bubbles (voids) are generated in the optical component, which may affect the optical properties. Furthermore, since the cooling time in a die is sharply increased as the thickness is increased, the molding cycle is considerably increased. In the three-layer structure, even when a thicker plastic optical component is produced, the thickness of the optical component molded at a time can be decreased. Therefore, the generation of residual stress and vacuum bubbles (voids) in the optical component can be suppressed.

In this embodiment, at least the coating portions 28 are made of a material containing a polycarbonate having a viscosity-average molecular weight of 23000 or more and 31000 or less. Thus, even if a plastic optical component 3 to which an organic solvent is applied is used, the generation of cracks in the core member 1 caused by exposing the plastic optical component 3 to a constant-temperature-and-humidity test environment that assumes long-term deterioration can be suppressed. Furthermore, the core portion 27 and the coating portions 28 are, for example, made of the same material. When they are made of the same material, the refraction at interfaces between the core portion 27 and coating portions 28 is eliminated, which reduces the precision required for the optical surfaces of the core portion 27. Therefore, the molding cycle can be shortened.

The core member 1 may have any shape such as a meniscus lens shape, a double-convex lens shape, a double-concave lens shape, a plano-convex lens shape, or a plano-concave lens shape.

The optical surfaces 211 and 212 may be any surface such as a spherical surface, an aspherical surface, or a free-form surface.

The plastic coatings 2 may be made of a cycloolefin resin or the like, but are desirably made of a resin containing methyl methacrylate. Use of the resin containing methyl methacrylate can provide a plastic optical component 3 whose surface has better rubfastness. Furthermore, the plastic coatings contain, for example, at least one additive having ultraviolet absorbing characteristics. This can provide a plastic optical component 3 having better ultraviolet resistance. The additive having ultraviolet absorbing characteristics contains, for example, a benzotriazole compound, a benzophenone compound, or a triazine compound. The additive is added in such an amount that the physical properties of the plastic coatings 2 are not affected, and the amount is, for example, 0.1 parts by weight or more and 5 parts by weight or less based on the total weight of each plastic coating 2.

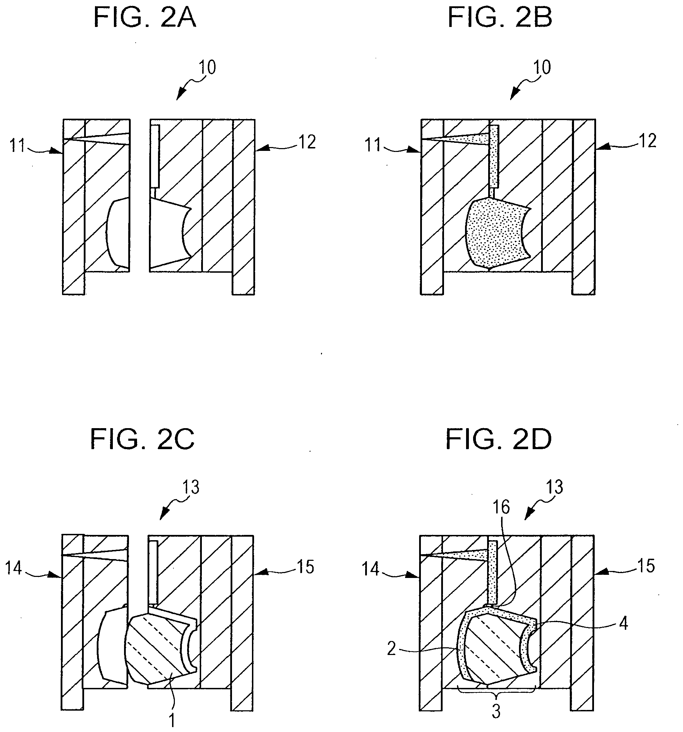

Figs. 2A to 2D are sectional views illustrating a die used in a method for producing a plastic optical component according to this embodiment. In Figs. 2A and 2B, a core member-molding die 10 for performing injection molding on the core member includes a fixed die 11 and a movable die 12. In Figs. 2C and 2D, a plastic coating-molding die 13 for coating the core member with plastic coatings by injection molding includes a fixed die 14, a movable die 15, and a gate 16 for the plastic coatings 2. In this embodiment, first, a core member 1 is molded in the core member-molding die 10 illustrated in Fig. 2A. A molten resin containing a polycarbonate is poured into the core member-molding die 10 to perform molding. The molten resin containing a polycarbonate may contain, in addition to the polycarbonate, an ultraviolet absorber and a mold-release agent. The viscosity-average molecular weight of the molten resin containing a polycarbonate is 23000 or more and 31000 or less.

Subsequently, the resulting core member 1 is inserted into the movable die 15 of the plastic coating-molding die 13. Herein, spaces for molding plastic coatings 2 to coat the front and back surfaces of the core member 1 and a space for molding a rib 4 to be formed on the side surface of the core member are formed in the plastic coating-molding die 13. The space for molding the rib 4 is formed on only a part of the side surface of the core member 1. Therefore, a side surface on which the space is not formed can be brought into contact with the plastic coating-molding die 13. Thus, the core member 1 can be firmly fixed onto the plastic coating-molding die 13. The gate 16 which is a hole for pouring a resin into the spaces is made in the space for molding the rib 4. A molten material for the plastic coatings 2 is simultaneously poured into the spaces formed on the front and back surfaces of the core member 1 from the gate 16 through the rib 4. The presence of the rib 4 does not require flow paths (sprue, runner, and gate) through which the molten material for the plastic coatings 2 is separately poured into the front and back surfaces of the core member 1. As a result, the number of cylinders in an injection molding machine (not illustrated) used when the plastic coatings 2 are molded can be decreased, and the die structure is also simplified.

The thickness 5 of the rib is 0.5 mm or more and 3 mm or less. If the thickness 5 of the rib is less than 0.5 mm, the stress applied when a molten material for the plastic coatings 2 is poured into a die increases, which may cause sink marks and increase the residual stress. If the thickness 5 of the rib is more than 3 mm, the molding pressure required when the plastic coatings 2 are molded increases, which may cause deformation of the core member 1.

Even if an organic solvent is applied to the plastic optical component produced by the above-described production method, the formation of cracks in the core member 1 caused by exposing the plastic optical component to a constant-temperature-and-humidity test environment that assumes long-term deterioration can be suppressed.

### Example 1

Next, Example 1 according to the present invention will be described.

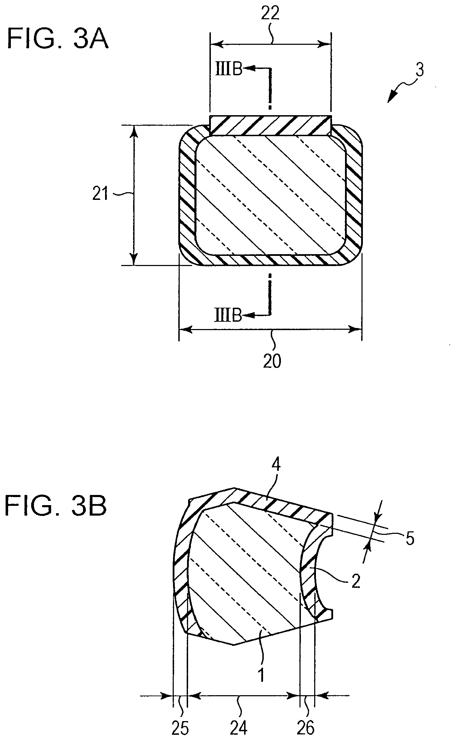

Figs. 3A and 3B illustrate a structure of Example 1. Fig. 3A is a plan view illustrating a plastic optical component according to Example 1 and Fig. 3B is a sectional view illustrating the plastic optical component. In Fig. 3A, the reference numeral 20 represents the maximum outer dimension of the plastic optical component in a lateral direction and the reference numeral 21 represents the maximum outer dimension of the plastic optical component without the rib in a vertical direction. Herein, the maximum outer dimension 20 in a lateral direction was 20 mm and the maximum outer dimension 21 in a vertical direction was 15 mm. The reference numeral 22 represents the maximum width of the rib 4, which was 18 mm herein. The thickness 5 of the rib 4 was 1 mm. In Fig. 3B, the reference numeral 24 represents a thickness of the core member at the center, which was 10 mm herein. The reference numerals 25 and 26 represent thicknesses of the plastic coatings at the front and back along the central axis (optical axis), which were 1 mm and 1 mm, respectively.

First, a plurality of resins containing a polycarbonate, which serve as materials for a core member 1, were prepared in the form of pellet. The viscosity-average molecular weight of each of the prepared resins containing a polycarbonate was measured. The measurement of the viscosity-average molecular weight was performed using a pellet before molding. Specifically, the limiting viscosity was measured in conformity with the method described in JIS K 7252-4 using a viscosity detector as a detector of size-exclusion chromatography (SEC) to determine the viscosity-average molecular weight.

A polycarbonate having a viscosity-average molecular weight of 23000 was used as the material for the core member 1 of Example 1-1.

A polycarbonate having a viscosity-average molecular weight of 24000 was used as the material for the core member 1 of Example 1-2.

A polycarbonate having a viscosity-average molecular weight of 26000 was used as the material for the core member 1 of Example 1-3.

A polycarbonate having a viscosity-average molecular weight of 31000 was used as the material for the core member 1 of Example 1-4.

A polycarbonate having a viscosity-average molecular weight of 15000 was used as the material for the core member 1 of Comparative Example 1-1.

A polycarbonate having a viscosity-average molecular weight of 20000 was used as the material for the core member 1 of Comparative Example 1-2.

A polycarbonate having a viscosity-average molecular weight of 21000 was used as the material for the core member 1 of Comparative Example 1-3.

Subsequently, a material for plastic coatings was prepared. The material for plastic coatings was poly(methyl methacrylate). Furthermore, 1,2-hydroxy-5-methyl-1-benzotriazole having ultraviolet absorbing characteristics was added to the material for plastic coatings so as to have a content of 1.0 part by weight based on the entire material for plastic coatings.

Subsequently, a plastic optical component 3 was produced by the following production method. The prepared resin containing a polycarbonate was melted and poured into the core member-molding die 10 illustrated in Figs. 2A and 2B to mold a core member 1. Then, as illustrated in Fig. 2C, the core member 1 was inserted into a movable die 15 of the plastic coating-molding die 13. The prepared material for plastic coatings 2 was melted, simultaneously poured into spaces formed on the front and back surfaces of the core member 1 from a gate 16 through a rib 4, and cured. Thus, a plastic optical component 3 was produced.

The produced plastic optical component 3 was immersed in an organic solvent for about one second and then dried at room temperature. The plastic optical component 3 was then left to stand at a temperature of 60°C and a humidity of 90% for 200 hours, and then the external appearance of the plastic optical component 3 was checked. In Examples and Comparative Examples, the check of the external appearance was performed 20 times, and the case where cracks were formed even once was evaluated to be "Failure". The organic solvent used was a mixed solution of isohexane (80%) and ethanol (14%) (lens cleaning solvent, trade name: EE-6310 manufactured by Olympus Corporation). The results show that the formation of cracks was suppressed in Examples 1-1 to 1-4. In other words, it was found that when the viscosity-average molecular weight of the material containing a polycarbonate and used for the core member 1 was 23000 or more and 31000 or less, the formation of cracks in the core member 1 could be suppressed.

Table 1 shows the results of the experiment.

**Table 1**

| | Viscosity-average molecular weight of core member | Result |
|---|---|---|
| Example 1-1 | 23000 | No cracks |
| Example 1-2 | 24000 | No cracks |
| Example 1-3 | 26000 | No cracks |
| Example 1-4 | 31000 | No cracks |
| Comparative Example 1-1 | 15000 | Failure |
| Comparative Example 1-2 | 20000 | Failure |
| Comparative Example 1-3 | 21000 | Failure |

### Example 2

Next, Example 2 will be described.

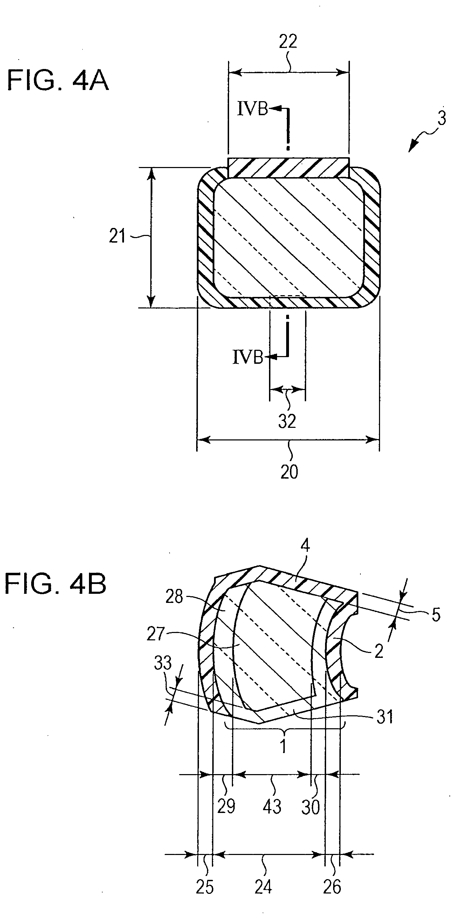

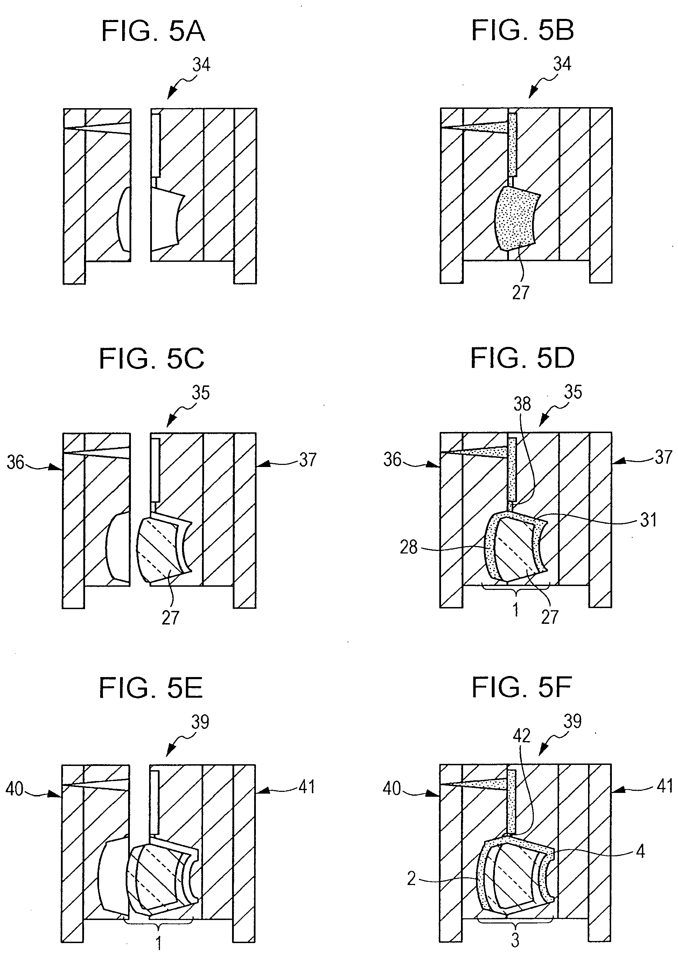

Figs. 4A and 4B and Figs. 5A to 5F illustrate a structure of Example 2 according to the present invention. Fig. 4A is a plan view illustrating a plastic optical component of Example 2 and Fig. 4B is a sectional view illustrating the plastic optical component. In Fig. 4A, the reference numeral 20 represents the maximum outer dimension of the plastic optical component in a lateral direction and the reference numeral 21 represents the maximum outer dimension of the plastic optical component without the rib in a vertical direction. Herein, the maximum outer dimension 20 in a lateral direction was 20 mm and the maximum outer dimension 21 in a vertical direction was 15 mm. The reference numeral 22 represents the maximum width of the rib 4, which was 18 mm herein. The thickness 5 of the rib 4 was 1 mm. In Fig. 4B, the reference numeral 24 represents a thickness of the core member at the center, which was 10 mm herein. The reference numerals 25 and 26 represent thicknesses of the plastic coatings at the front and back along the central axis (optical axis), which were 1 mm and 1 mm, respectively. In Fig. 4B, the reference numeral 27 represents a core portion constituting the core member 1 and the reference numeral 28 represents coating portions that coat the front and back surfaces of the core portion. Furthermore, the reference numerals 29 and 30 represent thicknesses of the coating portions 28 at the front and back along the central axis (optical axis), which were 1 mm and 1 mm, respectively. The reference numeral 31 represents a rib formed on the core member 1 and the reference numeral 32 represents the maximum width of the rib 31, which was 3 mm. The reference numeral 33 represents a thickness of the rib 31, which was 1 mm.

In Example 2, the core portion 27 and the coating portions 28 were formed of the same resin containing a polycarbonate.

First, a plurality of resins containing a polycarbonate, which serve as materials for the core portion 27 and the coating portions 28, were prepared. A polycarbonate having a viscosity-average molecular weight of 23000 was used as the material for the core portion 27 and the coating portions 28 of Example 2-1.

A polycarbonate having a viscosity-average molecular weight of 24000 was used as the material for the core portion 27 and the coating portions 28 of Example 2-2.

A polycarbonate having a viscosity-average molecular weight of 26000 was used as the material for the core portion 27 and the coating portions 28 of Example 2-3.

A polycarbonate having a viscosity-average molecular weight of 31000 was used as the material for the core portion 27 and the coating portions 28 of Example 2-4.

A polycarbonate having a viscosity-average molecular weight of 15000 was used as the material for the core portion 27 and the coating portions 28 of Comparative Example 2-1.

A polycarbonate having a viscosity-average molecular weight of 20000 was used as the material for the core portion 27 and the coating portions 28 of Comparative Example 2-2.

A polycarbonate having a viscosity-average molecular weight of 21000 was used as the material for the core portion 27 and the coating portions 28 of Comparative Example 2-3.

Subsequently, a material for plastic coatings was prepared. The material for plastic coatings was poly(methyl methacrylate). Furthermore, 1,2-hydroxy-5-methyl-1-benzotriazole having ultraviolet absorbing characteristics was added to the material for plastic coatings so as to have a content of 1.0 part by weight based on the entire material for plastic coatings.

Subsequently, a plastic optical component 3 was produced.

Figs. 5A to 5F are sectional views illustrating a die used to produce the plastic optical component of Example 2. Figs. 5A and 5B illustrate a die 34 for molding a core portion 27. Figs. 5C and 5D illustrate a coating portion-molding die 35 for molding coating portions 28 by pouring a material into spaces on the front and back surfaces of the core portion through a rib 31. The coating portion-molding die 35 includes a fixed die 36, a movable die 37, and a gate 38 made in the rib 31 in order to pour the material for forming the coating portions into the spaces. Figs. 5E and 5F illustrate a plastic coating-molding die 39 which includes a fixed die 40, a movable die 41, and a gate 42 for plastic coatings 2. A plastic optical component was produced with these dies by the following production method. The prepared resin containing a polycarbonate was melted and poured into the core portion-molding die 34 illustrated in Figs. 5A and 5B to mold a core portion 27. Subsequently, the core portion 27 was inserted into the movable die 37 of the coating portion-molding die 35 illustrated in Figs. 5C and 5D. The prepared resin containing a polycarbonate was melted and poured into spaces for forming coating portions from the gate 38 through the rib 31 to mold coating portions 28. Thus, a core member 1 was molded. Subsequently, the core member 1 was inserted into the movable die 41 of the plastic coating-molding die 39 illustrated in Figs. 5E and 5F. The prepared material for plastic coatings 2 was melted, simultaneously poured into spaces formed on the front and back surfaces of the core member 1 from the gate 42 through the rib 4, and cured. Thus, a plastic optical component 3 was produced.

Each of the produced plastic optical components 3 was immersed in an organic solvent for about one second and then dried at room temperature. The plastic optical component 3 was then left to stand at a temperature of 60°C and a humidity of 90% for 200 hours, and then the external appearance of the plastic optical component 3 was visually checked. In Examples and Comparative Examples, the check of the external appearance was performed 20 times, and the case where cracks were formed even once was evaluated to be "Failure". The organic solvent used was a mixed solution of isohexane (80%) and ethanol (14%) (lens cleaning solvent, trade name: EE-6310 manufactured by Olympus Corporation). The results show that the formation of cracks was suppressed in Examples 2-1 to 2-4. In other words, it was found that when the viscosity-average molecular weight of the material containing a polycarbonate and used for the core member 1 was 23000 or more and 31000 or less, the formation of cracks in the core member 1 could be suppressed.
Table 2 shows the results of the experiment.

**Table 2**

| | Viscosity-average molecular weight of core member 1 | | Result |
|---|---|---|---|
| | Viscosity-average molecular weight of core portion 27 | Viscosity-average molecular weight of coating portion 28 | |
| Example 2-1 | 23000 | 23000 | No cracks |
| Example 2-2 | 24000 | 24000 | No cracks |
| Example 2-3 | 26000 | 26000 | No cracks |
| Example 2-4 | 31000 | 31000 | No cracks |
| Comparative Example 2-1 | 15000 | 15000 | Failure |
| Comparative Example 2-2 | 20000 | 20000 | Failure |
| Comparative Example 2-3 | 21000 | 21000 | Failure |

In the plastic optical component according to an embodiment of the present invention, even if a plastic optical component to which an organic solvent is applied is exposed to a constant-temperature-and-humidity test environment that assumes long-term deterioration, formation of cracks in the core lens (core member) can be suppressed.

While the present invention has been described with reference to exemplary embodiments, it is to be understood that the invention is not limited to the disclosed exemplary embodiments but defined by the following claims.

## Claims

1. A plastic optical component (3) comprising:
a core lens (1); and
a plastic coating (2) that coats front and back surfaces of the core lens, the plastic coating being made of a material different from a material for the core lens,
wherein the core lens comprises a polycarbonate having a viscosity-average molecular weight of 23000 or more and 31000 or less,
**characterized in that** the plastic coating (2) coating the front and back surfaces of the core lens is obtainable by injection molding using a mold with the core lens inserted.

2. The plastic optical component according to Claim 1, wherein the core lens (1) has one of a meniscus lens shape, a double-convex lens shape, a double-concave lens shape, a piano-convex lens shape, or a plano-concave lens shape.

3. The plastic optical component according to Claim 1 or 2, wherein the core lens is obtainable by injection molding using a resin comprising said polycarbonate.

4. The plastic optical component according to any one of Claims 1 to 3, wherein the plastic coatings provide a high optical surface precision.

5. The plastic optical component according to any one of Claims 1 to 4 being suitable as a viewfinder lens of an optical apparatus.

6. The plastic optical component according to any one of Claims 1 to 5, wherein the plastic coating comprises methyl methacrylate.

7. The plastic optical component according to any one of Claims 1 to 6, wherein the plastic coating comprises an additive having ultraviolet absorbing characteristics.

8. The plastic optical component according to Claim 7, wherein the additive having ultraviolet absorbing characteristics comprises a benzotriazole compound, a benzophenone compound, or a triazine compound.

9. The plastic optical component according to Claim 7 or 8, wherein the plastic coating comprises the additive in a content of 0.1 parts by weight or more and 5 parts by weight or less.

10. The plastic optical component according to any one of Claims 1 to 9, further comprising a rib (4) formed on a part of a side surface of the core lens.

11. The plastic optical component according to Claim 10, wherein the rib has a thickness of 0.5 mm or more and 3 mm or less.

12. The plastic optical component according to any one of Claims 1 to 11, wherein the core lens comprises a core portion (27) and a coating portion (28).

13. A method for producing a plastic optical component (3), comprising:
molding a core lens (1) by injection molding using a resin comprising a polycarbonate having a viscosity-average molecular weight of 23000 or more and 31000 or less; and
coating the core lens (1) with a plastic coating (2) by injection molding, wherein a molten material for the plastic coating (2) different from a material for the core lens (1) is poured onto front and back surfaces of the core lens (1).

14. The method according to Claim 13,
wherein the core lens comprises a core portion (27) and a coating portion (28),
the core portion is molded by injection molding using a resin comprising a polycarbonate having a viscosity-average molecular weight of 23000 or more and 31000 or less, and
the coating portion is molded by pouring a resin comprising a polycarbonate having a viscosity-average molecular weight of 23000 or more and 31000 or less onto front and back surfaces of the core portion.

## Patentansprüche

1. Optische Kunststoffkomponente (3), umfassend:
eine Kernlinse (1); und
eine Kunststoffbeschichtung (2), die vorder- und rückseitige Oberfläche der Kernlinse beschichtet, wobei die Kunststoffbeschichtung aus einem von einem Material der Kernlinse verschiedenen Material gefertigt ist,
wobei die Kernlinse ein Polycarbonat mit einem viskositätsgemittelten Molekulargewicht von 23000 oder mehr und 31000 oder weniger umfasst,
**gekennzeichnet dadurch, dass** die die vorder- und rückseitige Oberfläche der Kernlinse beschichtende Kunststoffbeschichtung (2) durch Spritzgießen unter Verwendung einer Form, in welche die Kernlinse eingesetzt ist, erhalten werden kann.

2. Optische Kunststoffkomponente nach Anspruch 1, wobei die Kernlinse (1) eine Meniskuslinsenform, eine doppelt konvexe Linsenform, eine doppelt konkave Linsenform, eine plankonvexe Linsenform oder eine plankonkave Linsenform aufweist.

3. Optische Kunststoffkomponente nach Anspruch 1 oder 2, wobei die Kernlinse durch Spritzgießen unter Verwendung eines das Polycarbonat umfassenden Harzes erhalten werden kann.

4. Optische Kunststoffkomponente nach einem der Ansprüche 1 bis 3, wobei die Kunststoffbeschichtungen eine hohe optische Oberflächengenauigkeit bereitstellen.

5. Optische Kunststoffkomponente nach einem der Ansprüche 1 bis 4, die sich als eine Sucherlinse einer optischen Vorrichtung eignet.

6. Optische Kunststoffkomponente nach einem der Ansprüche 1 bis 5, wobei die Kunststoffbeschichtung Methylmethacrylat umfasst.

7. Optische Kunststoffkomponente nach einem der Ansprüche 1 bis 6, wobei die Kunststoffbeschichtung ein Additiv mit ultraviolettabsorbierenden Eigenschaften umfasst.

8. Optische Kunststoffkomponente nach Anspruch 7, wobei das Additiv mit ultraviolettabsorbierenden Eigenschaften eine Benzotriazolverbindung, eine Benzophenonverbindung oder eine Triazinverbindung umfasst.

9. Optische Kunststoffkomponente nach Anspruch 7 oder 8, wobei die Kunststoffbeschichtung das Additiv mit einem Gehalt von 0,1 Gewichtsteilen oder mehr und 5 Gewichtsteilen oder weniger umfasst.

10. Optische Kunststoffkomponente nach einem der Ansprüche 1 bis 9, weiterhin umfassend eine Rippe (4), die auf einem Teil einer seitlichen Oberfläche der Kernlinse ausgebildet ist.

11. Optische Kunststoffkomponente nach Anspruch 10, wobei die Rippe eine Dicke von 0,5 mm oder mehr und 3 mm oder weniger aufweist.

12. Optische Kunststoffkomponente nach einem der Ansprüche 1 bis 11, wobei die Kernlinse einen Kernabschnitt (27) und einen Beschichtungsabschnitt (28) umfasst.

13. Verfahren zum Herstellen einer optischen Kunststoffkomponente (3), umfassend:
Gießen einer Kernlinse (1) durch Spritzgießen unter Verwendung eines Harzes, das ein Polycarbonat mit einem viskositätsgemittelten Molekulargewicht von 23000 oder mehr und 31000 oder weniger umfasst; und
Beschichten der Kernlinse (1) mit einer Kunststoffbeschichtung (2) durch Spritzgießen, wobei ein geschmolzenes Material für die Kunststoffbeschichtung (2), das sich von einem Material für die Kernlinse (1) unterscheidet, auf vorder- und rückseitige Oberfläche der Kernlinse (1) gegossen wird.

14. Verfahren nach Anspruch 13,
wobei die Kernlinse einen Kernabschnitt (27) und einen Beschichtungsabschnitt (28) umfasst,
der Kernabschnitt durch Spritzgießen unter Verwendung eines Harzes, das ein Polycarbonat mit einem viskositätsgemittelten Molekulargewicht von 23000 oder mehr und 31000 oder weniger umfasst, gegossen ist, und
der Beschichtungsabschnitt durch Gießen eines Harzes, das ein Polycarbonat mit einem viskositätsgemittelten Molekulargewicht von 23000 oder mehr und 31000 oder weniger umfasst, auf vorder- und rückseitige Oberfläche des Kernabschnitts gegossen ist.

## Revendications

1. Composant optique en matière plastique (3) comprenant :
une lentille centrale (1) ; et
un revêtement de matière plastique (2) qui revêt les surfaces avant et arrière de la lentille centrale, le revêtement de matière plastique étant produit à partir d'un matériau différent d'un matériau destiné à la lentille centrale,
dans lequel la lentille centrale comprend un polycarbonate ayant une masse moléculaire à viscosité moyenne de 23 000 ou plus et de 31 000 ou moins,
**caractérisé en ce que** le revêtement de matière plastique (2) revêtant les surfaces avant et arrière de la lentille centrale peut être obtenu par moulage par injection en utilisant un moule dans lequel la lentille centrale est insérée.

2. Composant optique en matière plastique selon la revendication 1, dans lequel la lentille centrale (1) a l'une d'une forme de lentille ménisque, d'une forme de lentille biconvexe, d'une forme de lentille biconcave, d'une forme de lentille plan-convexe, ou d'une forme de lentille plan-concave

3. Composant optique en matière plastique selon la revendication 1 ou 2, dans lequel la lentille centrale peut être obtenue par moulage par injection en utilisant une résine comprenant ledit polycarbonate.

4. Composant optique en matière plastique selon l'une quelconque des revendications 1 à 3, dans lequel les revêtements de matière plastique fournissent une haute précision de surface optique.

5. Composant optique en matière plastique selon l'une quelconque des revendications 1 à 4, qui est approprié en tant que lentille de viseur d'un appareil optique.

6. Composant optique en matière plastique selon l'une quelconque des revendications 1 à 5, dans lequel le revêtement de matière plastique comprend du méthacrylate de méthyle.

7. Composant optique en matière plastique selon l'une quelconque des revendications 1 à 6, dans lequel le revêtement de matière plastique comprend un additif ayant des caractéristiques d'absorption de l'ultraviolet.

8. Composant optique en matière plastique selon la revendication 7, dans lequel l'additif ayant des caractéristiques d'absorption de l'ultraviolet comprend un composé de benzotriazole, un composé de benzophénone, ou un composé de triazine.

9. Composant optique en matière plastique selon la revendication 7 ou 8, dans lequel le revêtement de matière plastique comprend l'additif à une teneur de 0,1 partie en poids ou plus et de 5 parties en poids ou moins.

10. Composant optique en matière plastique selon l'une quelconque des revendications 1 à 9, comprenant en outre une nervure (4) formée sur une partie d'une surface latérale de la lentille centrale.

11. Composant optique en matière plastique selon la revendication 10, dans lequel la nervure présente une épaisseur de 0,5 mm ou plus et de 3 mm ou moins.

12. Composant optique en matière plastique selon l'une quelconque des revendications 1 à 11, dans lequel la lentille centrale comprend une partie centrale (27) et une partie de revêtement (28).

13. Procédé destiné à produire un composant optique en matière plastique (3), consistant à :
mouler une lentille centrale (1) par moulage par injection en utilisant une résine comprenant un polycarbonate ayant une masse moléculaire à viscosité moyenne de 23 000 ou plus et de 31 000 ou moins ; et
revêtir la lentille centrale (1) d'un revêtement de matière plastique (2) par moulage par injection, dans lequel un matériau fondu destiné au revêtement de matière plastique (2) différent d'un matériau destiné à la lentille centrale (1) est versé sur les surfaces avant et arrière de la lentille centrale (1).

14. Procédé selon la revendication 13,
dans lequel la lentille centrale comprend une partie centrale (27) et une partie de revêtement (28), la partie centrale est moulée par moulage par injection en utilisant une résine comprenant un polycarbonate ayant une masse moléculaire à viscosité moyenne de 23 000 ou plus et de 31 000 ou moins, et
la partie de revêtement est moulée en versant une résine comprenant un polycarbonate ayant une masse moléculaire à viscosité moyenne de 23 000 ou plus et de 31 000 ou moins sur les surfaces avant et arrière de la partie centrale.
